## Europäisches Patentamt
## European Patent Office
## Office européen des brevets

(19)

(11) Publication number: **0 087 247**
**B2**

(12) # NEW EUROPEAN PATENT SPECIFICATION

(45) Date of publication of the new patent specification: 06.12.89

(51) Int. Cl.⁴: **A 23 J 3/00**

(21) Application number: **83300644.8**

(22) Date of filing: **09.02.83**

(54) Process for the preparation of protein hydrolysates.

(30) Priority: **22.02.82 US 350800**

(43) Date of publication of application:
**31.08.83 Bulletin 83/35**

(45) Publication of the grant of the patent:
**28.05.86 Bulletin 86/22**

(45) Mention of the opposition decision:
**06.12.89 Bulletin 89/49**

(84) Designated Contracting States:
**BE CH DE FR GB IT LI NL SE**

(56) References cited:
**EP-A-0 014 362**
**BE-A-659 731**
**FR-A-2 367 773**
**JP-A-46 015 653**
**JP-B-54 036 235**
**US-A-3 857 966**

**J. Dairy Research (1974), 41, pp. 283-287**
**Netherlands Milk Dany J. (1976), 30, pp. 95-105**
**J. Food Science (1980), 45, pp. 331-335**

(73) Proprietor: **STAUFFER CHEMICAL COMPANY,
Westport Connecticut 06880 (US)**

(72) Inventor: **Melachouris, Nicolas, 16 Country Club
Drive, White Plains New York 10607 (US)**
Inventor: **Lee, Chang Rae, 14 Skywood Court,
Yonkers New York 10710 (US)**
Inventor: **Lin, Chifa Felix, 50 Pine Lane, Irvington
New York 10533 (US)**

(74) Representative: **Smith, Sydney, Elkington and Fife
Beacon House 113 Kingsway, London WC2B 6PP
(GB)**

EP 0 087 247 B2

## Description

The invention relates to processes for enzymatically hydrolyzing proteinaceous solutions, particularly to provide organoleptically desirable protein hydrolysate compositions which can be used for dietary purposes and in particular for hospital diets.

It is well known that proteins can be digested with strong acid or alkali or with enzymes and used in diet foods. Hydrolysis of the protein takes place with the subsequent formation of protein fragments, peptides and amino acids. Fragmented protein materials of this type are desirable products for administration to humans and animals with digestive problems. However, the primary problems relative to the adoption of these techniques is the palatability of the product.

Of the known means to hydrolyze protein, enzymatic hydrolysis is preferred since it does not destroy essential amino acids to the extent that they are destroyed by acid or alkaline hydrolysis. However, enzymatic hydrolysis rarely goes to completion and the products of the enzymatic hydrolysis cannot be predicted and frequently the hydrolyzed protein is unsuitable because it contains bitter-tasting peptides. Products of this type to be effective as diets must be organoleptically acceptable. (Dietary Enzymatic Hydrolysates of Protein with Reduced Bitterness, Clegg et al., J. Food Tech. (1974) 9, 21 - 29).

In U.S. Patent 3 857 966 there is disclosed a method for preparing an egg albumen hydrolysate which does not contain the characteristic egg smell and taste. Egg albumen in a 5 % solution (pH 6.3 - 6.4) is heated to precipitate the protein. After cooling, the precipitate is separated by centrifugation, re-suspended in fresh water, homogenized in a Waring blender and centrifuged again. The washing step is repeated once more and the washed precipitate is used to make a 5 % protein suspension for hydrolysis.

After heating (95 - 100°C) the protein suspension at an alkaline pH (pH 8 - 9) for about 1 hour, enzymatic hydrolysis is then conducted using a two-stage enzyme system of an alkaline microbial protease in the first stage and a blend of neutral microbial protease and a plant enzyme in the second stage. Similar techniques are indicated in the patent to be applicable to soy protein isolate, whey or whey protein and fish protein.

U.S. 4 107 334 uses a similar precipitation technique to prepare the functional protein from microbial or vegetable protein, or whey by hydrolysis. Generally a solution of low solids and protein content is preferably adjusted to a pH of about the isoelectric point of the protein (4 - 7) and heated until a large proportion of the protein (at least 50 %) has been precipitated (for whey protein concentrate -90°C for 2 minutes).

After washing the protein is hydrolyzed using any acid, neutral or alkaline protease (fungal protease suggested).

The value of a protein hydrolysate in a special diet program depends in large part on the degree of hydrolysis. The extent of hydrolysis determines whether the product is a liquid or solid. For instance, for the use of the hydrolysate for patients with digestion problems, at least 80 % of the hydrolysate should be in the form of peptides of 500 molecular weight or less and 95 % of the hydrolysate should be in the form of peptides of less than 2 000 molecular weight. Such an extensive hydrolysis may have the disadvantages of long uneconomical reaction times, organoleptic problems, and biological contamination problems. In numerous processes, only a partial hydrolysis reaction is conducted to avoid the production of strongly flavored agents which are a by-product of extensive hydrolysis. Partial hydrolysis does not pose the same biological control problems as extensive hydrolysis which requires the addition of a preservative which can present both a flavor and odor problem. It would be advantageous to be able to conduct the hydrolysis rapidly and more completely while avoiding flavor problems and still obtain a product which is highly hydrolyzed.

These features can be provided in accordance with the present invention.

In accordance with the present invention there is provided a process for preparing an enzymatically hydrolyzed proteinaceous material derived from egg albumen and soy wherein the proteinaceous material is treated to reduce soluble non-proteinaceous fractions and increase the protein fraction thereof which comprises enzymatically hydrolyzing the proteinaceous material with fungal protease and pancreatin, the fungal protease and the pancreatin each being used in an amount sufficient to provide from 1 000 to about 100 000 hemoglobin and N.F. units respectively per gram of initial protein, for at least two hours and for a period sufficient to provide less than 23 % by weight peptide material which has a molecular weight above 1 400.

The source of the soy may be soybeans, especially in such forms as soy grits, solvent-extracted soybean flakes, soy flour, alcohol-treated soy flakes, soy concentrate and soy whey. The protein source is usually slurried in water, any undissolved material is separated, and the liquid phase is introduced into the process. Egg albumen may be used in either liquid, fresh or powdered form.

The protein source can be selected from those which are available commerically or they can be prepared according to techniques well known to the art. A commercially available soy protein is SUPRO soy isolate.

Since the hydrolysates used in hospital diets should be as low in lactose and ash as possible to avoid digestion problems, it is preferred to utilize as the protein source for hydrolysis a material which is high in protein and low in lactose. For these reasons, egg albumen is a preferred protein source.

In order to reduce soluble components to a minimum and maximize the protein, the proteinaceous material is generally pretreated prior to hydrolysis. As disclosed in U.S. 3 857 966 and 4 107 334, a solution of the protein, generally at about 5 % can be heated at about the isoelectric point of the protein to precipitate the protein. The solid protein can be separated from soluble ash and carbohydrates such as by centrifugation, washed and the liquid separated. Multiple washings can be used to reduce solubles though there is a tendency to lose protein. The washed precipitate can be dried for storage (freeze dried) or suspended in water to make a protein suspension for hydrolysis.

Further examples of pretreatment processes are those described in European Patent Application No. 83 300 642.2, Publication No. 0 087 245, filed simultaneously herewith and European Patent Application No. 83 300 643.0, Publication No. 0 087 246, filed simultaneously herewith.

According to an exemplary process for pretreating egg albumen in accordance with the teachings of EP-0 087 245, a 14 % total solids solution of egg albumen at native pH at about 80 - 85 % protein is gelled. During gelation, the gel is broken up with a spatula to reduce the particle size to curd. The curd is then centrifuged to remove loosely bound water. The particles are then washed with an amount of water (equivalent to the supernatant) and for a period of time sufficient to allow the non-proteinaceous substances to diffuse from the gel into the wash water. The protein is then separated by centrifugation from the wash liquid. Multiple washing steps can be accomplished if desired. If the curd does not contain any loosely bound water (as in the case of a soy protein gel), the initial centrifugation step does not need to be performed.

The solids after separation from the wash liquid are preferably ground to reduce the particle size of the material to a uniform size for hydrolysis.

As an optional step, the solid matter can be subjected to pasteurization conditions as are well known to a skilled artisan. The product can also be heated to destroy any enzyme inhibitors, generally from about 65°C to about 91°C for a minimum of 1 minute though this has not been found to be essential for high yields.

The material obtained at this point with or without the pasteurization can then be dried or subjected to hydrolysis using standard known techniques.

As an alternative, per EP-0 087 246, the pH of a 10 % solid solution of commercial powdered egg albumen can be adjusted to about 9.5, heated to 60°C and immediately cooled, and the pH readjusted to about pH 7. The material at this point can be subjected to hydrolysis.

The pretreated protein is dispersed, generally in an aqueous medium, for hydrolysis. The concentration of protein in the dispersion is not critical and normally ranges from about 1 % to about 20 % and preferably from about 3 % to about 9 % by weight protein based on the total weight of the dispersion. The particle size should be sufficiently small to accommodate efficient hydrolysis, particle sizes ranging from about 0.01 cm to about 0.2 cm being preferred.

The use of the combination of fungal protease and pancreatin in accordance with the invention provides a fast and efficient enzyme system for hydrolyzing a proteinaceous material. The hydrolysis reaction can be completed in a shorter time at a higher degree of digestion thereby avoiding flavor and biological contamination problems. The product, especially after a post-clarification treatment, is a clear solution high in peptides, low in ash and has good organoleptic properties.

The fungal protease can be derived from the genus Aspergillus illustrated by A. oryzae, A. flavus, A. niger, and particularly A. oryzae. Known enzyme preparations from A. oryzae are mixtures of acid, neutral and alkaline proteases demonstrating both exopeptidase and endopeptidase activity on protein molecules. The activity of the fungal protease is within the range of from 1 000 to about 100 000 and preferably from about 8 000 to about 20 000 hemoglobin units per gram of protein in the starting material as determined by the Kjeldahl nitrogen method. One hemoglobin unit is that amount of enzyme which will liberate 0.0447 mg of nonprotein nitrogen in 30 minutes. The optimum temperature for effective use of the fungal protease from A. oryzae ranges from about 40°C to about 60°C and preferably from about 45°C to about 55°C.

The pancreatin is a pancreas extract which can be obtained from porcine, ovine or bovine. The proteolytic enzymes in the pancreatin are principally trypsin, chymotrypsin (A, B and C), elastase, and carboxypeptidase (A and B). The protease activity for the pancreatin ranges from 1 000 to about 100 000 and preferably from about 8 000 to about 20 000 N.F. units per gram. One N.F. unit of protease activity is contained in that amount of pancreatin that digests 1 milligram of casein under the conditions of the N.F. Assay for the activity of the particular enzyme. Preferably, the pancreatin is processed such that substantially all of the exo- and endopeptidases extracted from the pancreas remains in the pancreatin.

The units used herein to express the activity of the above classes of proteases are well known to the art and are clearly defined in such references as the First Supplement to the Food Chemical Codex, Second Edition, 1974.

The activity of the enzymes per se is governed by practical considerations. If the enzyme is too crude, an excess of enzyme must be used in order to obtain a practical rate of hydrolysis. This adds possible undesirable materials to the substrate. If the enzyme is too pure, its use would not be economically practical.

The temperature and the pH of the hydrolysis will depend upon the nature of the protein hydrolyzed and the proteolytic enzymes employed, and are selected to optimize the conversion of the denatured protein to functional protein. Convenient temperatures range from about 20°C to 65°C. Below 200°C., the hydrolysis proceeds at a rather slow rate, while at temperatures above 65°C the enzyme may be inactivated. The optimum temperature is normally about 50°C., preferably about 40°C to about 50°C.

The optimum pH range for use depends on the enzyme activity desired. The optimum pH for both fungal protease and pancreatin ranges from about 6 to about 9.

The fungal protease is used in a ratio to the pancreatin within the range of about 1 : 1 to about 1 : 5 and preferably from about 1 : 3 to about 1 : 4. This is the ratio of the total amount of fungal protease to pancreatin used in the hydrolysis.

The hydrolysis can be conducted by using a one or two stage introduction of the enzymes. The proteinaceous material can be partially hydrolyzed with fungal protease and, after heat inactivation, further hydrolyzed with pancreatin alone or preferably with a combination of fungal protease and pancreatin. In this case the ratio of fungal protease to pancreatin added in the second stage ranged from about 1 : 1 to about 1 : 5, the total ratio of fungal protease to pancreatin being as given herein before. The proteinaceous material can also be hydrolyzed using only the combination of fungal protease and pancreatin. To avoid one enzyme from hydrolyzing the other, the enzymes are usually added separately allowing about 1 minute for the first enzyme (fungal protease) to establish itself before addition of the second (pancreatin). The degree of hydrolysis is related to the period of time incubated, the shorter the incubation period, the lower the degree of hydrolysis.

The time of hydrolysis is at least two hours and the hydrolysis is conducted for a period sufficient to provide a proteinaceous material containing less than 23 % by weight protein which has a molecular weight above 1 400.

In the two step hydrolysis, the first stage is allowed to proceed for at least 5 hours and preferably for about 6 to 8 hours though longer times can be used if desired. The second stage is allowed to proceed for a period of time sufficient to provide the degree of hydrolysis desired, usually from about 12 to about 17 hours. In the single stage hydrolysis, the reaction can be allowed to proceed for at least 6 hours and preferably from about 6 to about 8 hours.

At the conclusion of the first stage or the second stage, the enzymes are inactivated by known procedures. The method of treatment will depend upon the nature of the enzyme, but the inactivation is usually accomplished by heating the reaction solution to from about 75° to 100°C for from about 1 to 60 minutes. Depending on the enzyme employed, such treatment may be accompanied by a pH adjustment (pH 6 - 8 being preferred). A combination of pH and temperature adjustments may be used for inactivation when the use of high temperature is undesirable. After cooling, the product can be dried, used as is or further processed to improve clarity such as by filtering. It has also been found desirable to incorporate activated carbon or bentonite in an amount ranging from about 25 % to about 200 % based on the weight of the protein used to prepare the hydrolysate in the liquid to improve color. After separation (filtration, centrifugation), the hydrolysate can be dried by any suitable means such as freeze drying or spray drying.

The hydrolysate either before separation or after separation and/or drying can be employed in a wide variety of food substrates to increase the nutritional value thereof. For example, the hydrolysates can be used in dry beverage mixes, soft drinks, fruit juices, flavored liquid beverages and the like with no adverse effect on the organoleptic characteristics of the beverages. The most direct use of the hydrolysate is in a liquid special diet. This generally takes the form of a flavored emulsion with characteristics of a milk shake. Frozen slushes can also be prepared containing the hydrolysates.

As used herein all percentages are by weight based on the weight of the composition referred to unless otherwise stated.

Protein amounts are determined by the Kjeldahl method.

The invention will be further illustrated in the Examples which follow.

## Example 1

1 200 grams of commercial dried egg albumen were dissolved in water to provide a solution having 14 % by weight egg albumen (pH 7.4). The solution was occasionally agitated and heated to an internal temperature of between 75 and 80°C for about 1 hour until a gel was formed. As the gel was forming it was broken up by stirring with a spatula. After the entire mass was gelled to a consistency of scrambled eggs, the gel was centrifuged. The supernatant (serum) was discarded and the curd was admixed with a volume of water equivalent to that of the discarded serum. After agitation, the mixture of water and crud was recentrifuged. The supernatant (wash water) was discarded. The curd was reconstituted in water to a level of 6 % solids and homogenized. The homogenized egg albumen solution at 6 % solids was pasteurized by heating to 65°C and cooled to about 50°C. To the solution was added 0.15 % (W/V) commercial fungal protease and 0.45 % (W/V) commercial pancreatin. The fungal protease had an activity of 384 000 hemoglobin units per gram or an activity of about 11 700 hemoglobin units per gram of starting protein whereas the pancreatin contained 100 N.F. units per milligram and had an activity of about 9 000 N.F. units per gram of starting protein. The solution containing both enzymes were incubated for 7 hours at 50°C with stirring. No pH adjustment was made before or during digestion. During digestion, aliquots of the digest were removed from each solution for analysis. Ten milliliters of each aliquot were admixed with 10 milliliters of 30 % trichloroacetic acid solution. After mixing completely, the mixture was centrifuged at about 900 gravities for 30 minutes. The supernatant was discarded and the precipitated material was dried in a 100 - 110°C oven for about 15 hours. The amount of the dried precipitated material was weighed. The amount of precipitation represents the amount of unhydrolyzed proteins and incompletely hydrolyzed peptides with greater than about 1 400 molecular weight. After 4 hours incubation time there remained 23 % by weight unhydrolyzed protein based on the weight of the starting egg albumen solids, after 6 hours 17 % and after 7 hours 16 %. After 7 hours of incubation, the egg albumen solution was heated to 90°C for enzyme inactivation. The solution was relatively clear and after holding the hydrolysate solution for 24 hours in a refrigerator, the height of the precipitate was only 1.2 centimeters out of 10 centimeters of solution.

For control purposes, powdered egg albumen from the same source was hydrolyzed without pretreatment. After 4 hours incubation time, 84 % by weight of the starting egg albumen solid remained unhydrolyzed or incompletely hydrolyzed, 59 % after 6 hours and 30 % after 7 hours. The solution was turbid, the precipitate was white and paste like and had a height of 4.9 centimeters.

## Example 2

A soy protein isolate (powder) was prepared from a commercial soy flour following the commercial isolation process as outlined in J. of Am. Oil Chemist's Society, Vol. 58(3), 1981, p. 334, Fig. 2. 108 grams of the soy protein isolate was dispersed in water to provide a solution having 18 % solids by weight. The solution was heated in a 97°C water bath with occasional stirring until a hard gel was formed. The gel was broken into small pieces and was admixed with 300 milliliters water. This solution was centrifuged at about 900 gravities for 30 minutes. After the centrifugation, the supernatant (wash water) was discarded and the curd was reconstituted in water to 6 % solids. The solution containing the 6 % soy protein isolate curd was homogenized to break the curd into small particles using a Polytron homogenizer (from Brinkman Instruments).

The pretreated solution (6 % solids) was hydrolyzed enzymatically following the procedure described in Example 1. During digestion, aliquots of the digest were removed from each solution for analysis. Ten milliliters of each aliquot were added with 10 milliliters of 30 % trichloroacetic acid solution. The amount of precipitation from each aliquot was determined following the procedure described in Example 1. After 2 hours only 22 % by weight of the original soy isolate remained unhydrolyzed or incompletely hydrolyzed, after 4 hours only 10 % and after 7 hours only 7 %.

## Example 3

A commercially obtained dried egg albumen was dissolved in an aqueous solution to provide approximately 10 % total solids in solution at room temperature. The pH of the solution was about 7. The pH was adjusted to about pH 9.5 by the slow addition of sodium hydroxide with rapid stirring. The alkaline egg albumen solution was heated to 65°C and immediately rapidly cooled to below about 50°C. After reaching room temperature, the pH of the solution was adjusted to about 7 by the slow addition of hydrochloric acid.

To this solution was added 0.25 % (W/V) commercial fungal protease having an activity of 384 000 hemoglobin units per gram. The solution was incubated for 6 hours at 50°C with stirring. The pH was then adjusted to pH 9.5 by the slow addition of sodium hydroxide with stirring. After heating to about 75° - 80°C., the solution was immediately cooled and the pH adjusted to pH 8. 0.25 % (W/V) of commercial pancreatin containing 100 N.F. units per milligram was added and the solution incubated for 17 hours at 45°C. The enzymes were inactivated by heating to 85 - 100°C for a sufficient time to effect inactivation and pasteurization. The solution was centrifuged at 650 gravities for 1 hour and filtered. The supernatant was freeze dried. The yield which was calculated after heating to 85°C., centrifuging and filtering was 77 % after only 23 hours of incubation. The percent soluble nitrogen in 15 % trichloroacetic acid was 69 % of the starting egg albumen nitrogen.

The foregoing procedure was compared to a like process without the first two heating steps (the heating before and after the first incubation step). The egg albumen hydrolysis was incomplete even after 48 hours and looked like a paste when heated to 85°C. The coagulated hydrolysate could not be filtered and showed poor separation upon centrifugation.

## Claims

1. A process for preparing an enzymatically hydrolyzed proteinaceous material derived from egg albumen and soy wherein the proteinaceous material is treated to reduce soluble non-proteinaceous fractions and increase the protein fraction thereof which comprises enzymatically hydrolyzing the proteinaceous material with fungal protease and pancreatin, the fungal protease and the pancreatin each being used in an amount sufficient to provide from 1 000 to about 100 000 hemoglobin and N.F. units respectively per gram of initial protein, for at least two hours and for a period sufficient to provide less than 23 % by weight peptide material which has a molecular weight above 1 400.

2. A process as claimed in claim 1 characterised in that after treating the proteinaceous material to reduce soluble non-proteinaceous fractions and increase the protein fraction thereof it is reacted with fungal protease, heated to inactivate the fungal protease, and the protein is reacted with fungal protease in combination with pancreatin.

3. A process as claimed in claim 1 *characterised in that* the ratio of fungal protease to pancreatin is within the range of from 1 : 1 to 1 : 5.

4. A process as claimed in claim 2 *characterised in that* the total ratio of fungal protease to pancreatin is within the range of from 1 : 1 to 1 : 5.

5. A process as claimed in any of claims 1 to 4 *characterised in that* the fungal protease is used in an amount sufficient to provide from 8 000 to 20 000 hemoglobin units per gram of initial protein and the pancreatin is used in an amount sufficient to provide from 8 000 to 20 000 N.F. units per gram of initial protein.

6. A process as claimed in any of claims 1 to 5 *characterised in that* the enzymatically hydrolysed protein is post-treated in solution with activated carbon.

7. A process as claimed in any of claims 1 to 6 *characterised in that* the protein is derived from egg albumen.

8. A process as claimed in any of claims 1 to 6 *characterised in that* the protein is derived from soy.

**Patentansprüche**

1. Verfahren zur Herstellung eines enzymatisch hydrolisierten proteinhaltigen Materials, das von Eialbumen und Soja stammt, worin das proteinhaltige Material behandelt wird, um lösliche nicht-proteinhaltige Fraktionen zu verringern und die Proteinfraktion davon zu erhöhen, wobei man das proteinhaltige Material mit Pilzprotease und Pankreatin unter Einsatz der Pilzprotease und des Pankreatins jeweils in einer solchen Menge, daß 1 000 bis etwa 100 000 Hämoglobin- bzw. N.F.-Einheiten pro Gramm Ausgangsprotein bereitgestellt werden, mindestens zwei Stunden lang und so lange enzymatisch hydrolysiert, daß weniger als 23 Gew.-% Peptidmaterial mit einem Molekulargewicht oberhalb von 1 400 erhalten wird.

2. Verfahren nach Anspruch 1, dadurch *gekennzeichnet* daß man nach Behandlung des proteinhaltigen Materials zur Verringerung der löslichen nicht-proteinhaltigen Fraktionen und zur Steigerung des Proteinanteils davon dieses Material mit Pilzprotease umsetzt sowie erhitzt, um die Pilzprotease zu inaktivieren, und das Protein mit Pilzprotease in Kombination mit Pankreatin umsetzt.

3. Verfahren nach Anspruch 1, dadurch *gekennzeichnet* daß das Verhältnis von Pilzprotease zu Pankreatin innerhalb des Bereichs von 1 : 1 bis 1 : 5 liegt.

4. Verfahren nach Anspruch 2, dadurch *gekennzeichnet* daß das Gesamtverhältnis von Pilzprotease zu Pankreatin innerhalb des Bereichs von 1 : 1 bis 1 : 5 liegt.

5. Verfahren nach einem der Ansprüche 1 bis 4, dadurch *gekennzeichnet* daß man die Pilzprotease in einer so großen Menge einsetzt, daß 8 000 bis 20 000 Hämoglobineinheiten pro Gramm Ausgangsprotein bereitgestellt werden, und daß man das Pankreatin in einer so großen Menge einsetzt, daß 8 000 bis 20 000 N.F.-Einheiten pro Gramm Ausgangsprotein bereitgestellt werden.

6. Verfahren nach einem der Ansprüche 1 bis 5, dadurch *gekennzeichnet* daß man das enzymatisch hydrolisierte Protein in Lösung mit Aktivkohle nachbehandelt.

7. Verfahren nach einem der Ansprüche 1 bis 6, dadurch *gekennzeichnet* daß das Protein von Eialbumen stammt.

8. Verfahren nach einem der Ansprüche 1 bis 6, dadurch *gekennzeichnet* daß das Protein von Soja stammt.

**Revendications**

1. Un procédé de préparation d'un produit protéiné obtenu par hydrolyse enzymatique et dérivé de l'albumine d'oeuf et du soja, dans lequel on traite le produit protéiné afin de réduire les fractions solubles non protéinées et d'en augmenter la fraction protéinée, qui comprend l'étape consistant à hydrolyser par voie enzymatique le produit protéiné à l'aide de protéase fongique et de pancréatine, la protéase fongique et la pancréatine étant utilisées chacune en quantité suffisante pour obtenir environ 1 000 à 100 000 unités d'hémoglobin et N.F. par gramme de protéine initiale pendant au moins deux heures et pendant une période de temps suffisante pour l'obtention d'un produit protéiné renfermant moins de 23 % en poids de peptide présentant un poids moléculaire supérieur à 1 400.

2. Un procédé selon la revendication 1, *caractérisé en ce qu'*après traitement du produit protéiné pour réduire les fraction solubles non protéinées et en augmenter la fraction protéinée, on le fait réagir avec la protéase fongique, on le chauffe afin d'inactiver la protéase fongique, et on fait réagir la protéine avec la protéase fongique en combinaison avec la pancréatine.

3. Un procédé selon la revendication 1, *caractérisé en ce que* le rapport protéase fongique/pancréatine est compris entre 1/1 et 1/5.

4. Un procédé selon la revendication 2, *caractérisé en ce que* la rapport protéase fongique/pancréatine est compris entre 1/1 et 1/5.

EP 0 087 247 B2

11

5. Un procédé selon l'une quelconque des revendications 1 à 4, *caractérisé en ce qu*'on utilise la protéase fongique en quantité suffisante pour obtenir 8 000 à 20 000 unités d'hémoglobine par gramme de protéine initiale, et que l'on utilise la pancréatine en quantité suffisante pour obtenir 8 000 à 20 000 unités N.F. par gramme de protéine initiale.

6. Procédé selon l'une quelconque des revendications 1 à 5, *caractérisé en ce que* la protéine hydrolysée par voie enzymatique est traité ultérieurement en solution au charbon actif.

7. Un procédé selon l'une quelconque des revendications 1 à 6, *caractérisé en ce que* la protéine est dérivée de l'albumine d'oeuf.

8. Un procédé selon l'une quelconque des revendications 1 à 6, *caractérisé en ce que* la protéine est dérivée du soja.